# EUROPÄISCHE PATENTSCHRIFT

(11) **EP 1 647 754 B1**
(45) Veröffentlichungstag und Bekanntmachung des Hinweises auf die Patenterteilung: **03.11.2010**
(21) Anmeldenummer: 05021453.5
(22) Anmeldetag: 30.09.2005
(51) Int. Cl.: F16L 23/08, F16L 23/20

(54) **Verbindung zweier Rohre**
Connection of two pipes
Raccordement de deux conduits

(30) Priorität: 15.10.2004 DE 102004050302
(43) Veröffentlichungstag der Anmeldung: 19.04.2006
(60) Teilanmeldung: 10009860.7
(73) Patentinhaber: NORMA Germany GmbH, 63477 Maintal (DE)
(72) Erfinder: Hartig, Günther, Lambourn, Berkshire RG17 8YP (GB); Williams, Steve, Witney, Oxon OX29 8QP (GB)
(74) Vertreter: Knoblauch, Andreas

(56) Entgegenhaltungen:
- EP-A- 0 573 764
- WO-A-2005/088093
- DE-C- 890 588
- FR-A- 2 810 716
- US-A- 805 645
- US-A- 3 633 928
- US-A- 3 674 291

## Beschreibung

Die Erfindung betrifft eine Verbindung zweier Rohre, von denen ein erstes Rohr einen mit einer ersten Wand am Rohrumfang angeschweißten ersten Flansch aus Blech aufweist und ein zweites Rohr einen als zweiter Flansch geformten Endabschnitt aufweist, mit einer die Flansche übergreifenden, spannbaren Schelle, die konische Seitenwände aufweist, durch die die Flansche beim Spannen der Schelle axial zueinander hin gedrückt werden, wobei der erste Flansch einen zur Längsmittelachse des ersten Rohres koaxialen, geschlossenen Ringraum mit dem ersten Rohr begrenzt. Eine solche Verbindung ist z.B. aus DE 890 588 bekannt.

Eine bekannte Vorrichtung dieser Art ist in dem Prospekt Nr. 6 "NORMA® PROFILSCHELLEN KEGELFLANSCHVERBIN-DUNGEN", September 1987, Seite 6, linke Spalte, oberstes Bild, schematisch als Ausschnitt dargestellt. Bei dieser Verbindung berühren sich die freien Enden beider Flansche, wobei sie zusammen mit dem ersten Rohr, an dem der erste Flansch angeschweißt ist, einen Ringraum begrenzen. Wenn die zu verbindenden Rohre Teile einer Abgasrohrleitung eines Kraftfahrzeugs sind, strömen sehr heiße Abgase mit einer Temperatur von etwa 900 bis 1000°C hindurch. Dadurch werden die Rohre sehr stark erhitzt, so daß sie sich radial stärker als die Schelle ausdehnen (aufweiten), die einer geringeren Temperatur ausgesetzt ist, weil sie radial außen liegt und somit überdehnt werden und reißen kann.

Der Erfindung liegt die Aufgabe zugrunde, eine Rohrverbindung der eingangs genannten Art anzugeben, bei der die Schelle einer geringeren thermischen Belastung ausgesetzt ist.

Erfindungsgemäß ist diese Aufgabe dadurch gelöst, daß sich eine zweite Wand des ersten Flansches am freien Ende des ersten Rohres in radialer Richtung gleitend abstützt.

Bei dieser Lösung bleibt der erste Flansch aufgrund der in dem Ringraum eingeschlossenen Luft relativ kühl. Der erste Flansch weitet sich mithin thermisch weniger stark auf, kann sich aber unter dem thermischen, radialen Aufweitungsdruck des ersten Rohres relativ zu diesem, unter Abstützung an der Schelle, radial nach innen biegen, da seine nicht am ersten Rohr angeschweißte Wand an dem freien Ende des ersten Rohres entlanggleitet, so daß der radiale Aufweitungsdruck des ersten Rohres durch die Verbiegung des ersten Flansches zum größten Teil aufgenommen wird, ohne sich vollständig auf die Schelle zu übertragen.

Vorzugsweise ist das freie Ende des ersten Rohres abgeschrägt. Auf dieser Schräge des ersten Rohres kann die zweite Wand des ersten Flansches unter dem radialen, thermischen Aufweitungsdruck leichter entlanggleiten.

Wenn sich die zweite Wand des ersten Flansches mit einer Rundung am freien Ende des ersten Rohres abstützt, kann die zweite Wand des ersten Flansches unter dem radialen Aufweitungsdruck noch leichter an der Schräge des ersten Rohres entlanggleiten.

Sodann kann dafür gesorgt sein, daß das zweite Rohr zwischen dem zweiten Flansch und seinem übrigen Rohrabschnitt einen elastisch biegsamen, zylindrischen Abschnitt aufweist. Durch eine radiale elastische Verbiegung des zylindrischen Abschnitts kann auch ein großer Teil des radialen Aufweitungsdrucks des zweiten Rohres aufgenommen werden. Gleichzeitig läßt die Elastizität des zylindrischen Abschnitts eine Abwinklung oder radiale Versetzung der beiden Rohre relativ zueinander zu, wenn sie aufgrund einer geringfügigen Fehlmontage nicht genau koaxial miteinander fluchten.

Ferner kann der Innendurchmesser des zylindrischen Abschnitts größer als der Außendurchmesser des ersten Rohres sein. Dies ermöglicht es, daß der zwischen dem zylindrischen Abschnitt und dem mit ihm verbundenen übrigen Rohrabschnitt des zweiten Rohres vorhandene Übergangsabschnitt des zweiten Rohres sich unter dem axialen thermischen Dehnungsdruck beider Rohre verbiegen kann und damit für einen axialen Dehnungsausgleich sorgt.

Vorzugsweise ist ferner dafür gesorgt, daß die Rundung der zweiten Wand des ersten Flansches in einen zylindrischen Fortsatz übergeht und der Innendurchmesser des zylindrischen Abschnitts des zweiten Rohres größer als der Außendurchmesser des Fortsatzes ist. Diese Ausbildung hat den Vorteil, daß sich ein Spalt oder Spiel zwischen dem zylindrischen Fortsatz der zweiten Wand des ersten Flansches ergibt, wobei der Fortsatz gleichzeitig einen zylindrischen Fortsatz des ersten Rohres bildet und das Zusammenstecken beider Rohre erleichtert, da das zweite Rohr auf dem Fortsatz geführt wird. Gleichzeitig lassen sich dadurch beide Rohre weitgehend zentrieren, wenn sie zunächst nicht koaxial zusammengeführt werden.

Günstig ist es ferner, wenn der Übergangsabschnitt zwischen dem zylindrischen Abschnitt und dem mit ihm verbundenen übrigen Rohrabschnitt des zweiten Rohres konisch ist. Die Konizität und Elastizität des Übergangsabschnitts erleichtert ebenfalls eine radiale thermische Aufweitung des übrigen Rohrabschnitts des zweiten Rohres relativ zu seinem zylindrischen Abschnitt und dem zweiten Flansch, so daß der radiale thermische Aufweitungsdruck des zweiten Rohres auf die Schelle zum Teil auch durch den Übergangsabschnitt ausgeglichen wird.

Eine weitere vorteilhafte Ausgestaltung besteht darin, daß die Verbindung zwischen den Flanschen einen Dichtring in Form eines elastischen Stahlbands mit wenigstens einem Randabschnitt aufweist, der auf einen Teil des übrigen Dichtringabschnitts zurückgebogen ist, und daß der übrige Dichtringabschnitt wenigstens eine über die Dicke des umgebogenen Randabschnitts im ungespannten Zustand der Schelle hinausragende Sicke aufweist. Dieser Dichtring hält zum einen sehr hohen Temperaturen stand, wie sie insbesondere bei Abgasrohren auftreten, ist aber dennoch im Bereich seiner Sicke elastisch. Diese Sicke nimmt nicht nur den Einspanndruck auf, sondern auch die axiale thermische Dehnung beider Rohre relativ zueinander, ohne sich vollständig eben zurückzuverformen. Diese Rückverformung wird dadurch verhindert, daß der oder die zurückgebogene(n) Randabschnitt(e) als Anschlag für den zweiten Flansch des zweiten Rohres wirkt bzw. wirken und dadurch eine weitere Rückverformung der Sicke(n) verhindert bzw. verhindern. Die Elastizität der Sicke(n) bleibt mithin weitgehend erhalten und trägt zur Verringerung der thermischen Axialbelastung der Schelle durch thermische Dehnung der Rohre bei.

Jeder Randabschnitt kann eine Lasche bilden, die sich leichter umbiegen läßt als ein durchgehend über den Umfang des übrigen Dichtungsabschnitts umgebördelter Randabschnitt des Dichtrings.

Die Sicke erstreckt sich vorzugsweise über den gesamten Umfang des Dichtrings. Sie kann daher durch ein einfaches Prägewerkzeug geformt werden.

Die Erfindung und ihre Weiterbildungen werden nachstehend anhand der beiliegenden Zeichnung eines bevorzugten Ausführungsbeispiels näher beschrieben. Darin stellen dar:
- Fig. 1: einen Ausschnitt eines Axialschnitts einer erfindungsgemäßen Verbindung zweier Rohre,
- Fig. 2: einen vergrößerten Ausschnitt der in Fig. 1 dargestellten Rohrverbindung,
- Fig. 3: ein vergrößertes Detail der Fig. 1,
- Fig. 4: eine Seitenansicht einer Schelle, die für die Verbindung nach Fig. 1 verwendet wird, in größerem Maßstab,
- Fig. 5: eine verkleinerte Seitenansicht des Dichtrings der in den Fig. 1 und 2 dargestellten Verbindung,
- Fig. 6: einen vergrößerten Ausschnitt des Dichtrings nach Fig. 5 und
- Fig. 7: einen Querschnitt des Dichtrings nach Fig. 6.

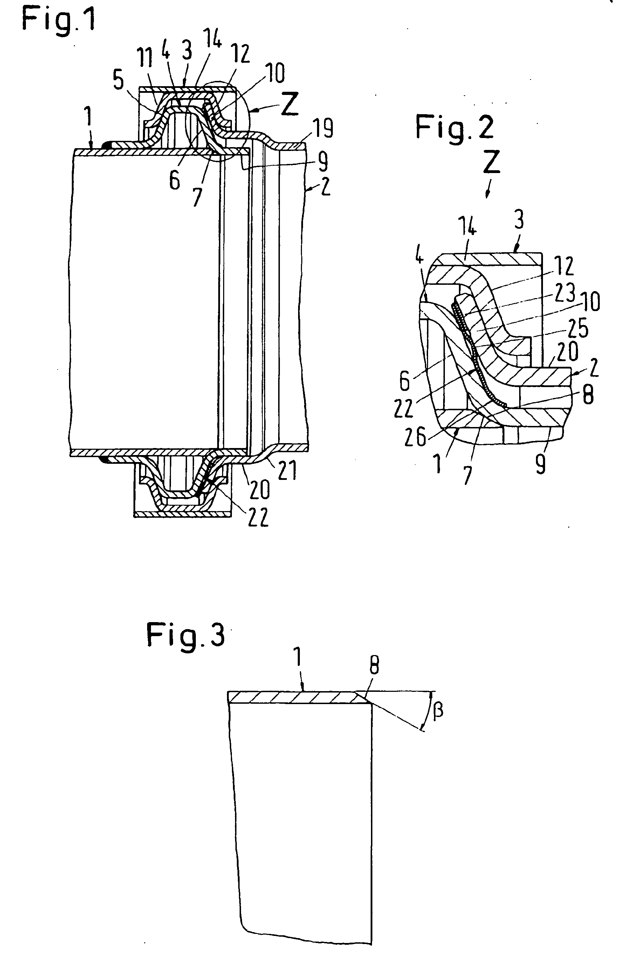

Die Verbindung in den Fig. 1 und 2 eines ersten Rohres 1 mit einem zweiten Rohr 2 mittels einer spannbaren Schelle 3 hat einen ersten Flansch 4 aus federndem Blech mit einer schrägen ersten Wand 5 und einer schrägen zweiten Wand 6. Die Wand 5 ist am Umfang des Rohres 1 angeschweißt. Die Wand 6 stützt sich mit einer Rundung 7 gleitend an einer Abschrägung 8 am freien Ende des Rohres 1 ab. Die Abschrägung 8 schließt mit der Axialrichtung des Rohres einen spitzen Winkel β von etwa 30° ein. Die Rundung 7 geht in einen zylindrischen Fortsatz 9 über, dessen Innen- und Außendurchmesser jeweils gleich dem Innen- und Außendurchmesser des Rohres 1 sind. Der Flansch 4 schließt daher zusammen mit dem Rohr 1 einen mit Luft gefüllten Ringraum ab.

Ein Endabschnitt des zweiten Rohres 2 bildet einen zweiten Flansch 10.

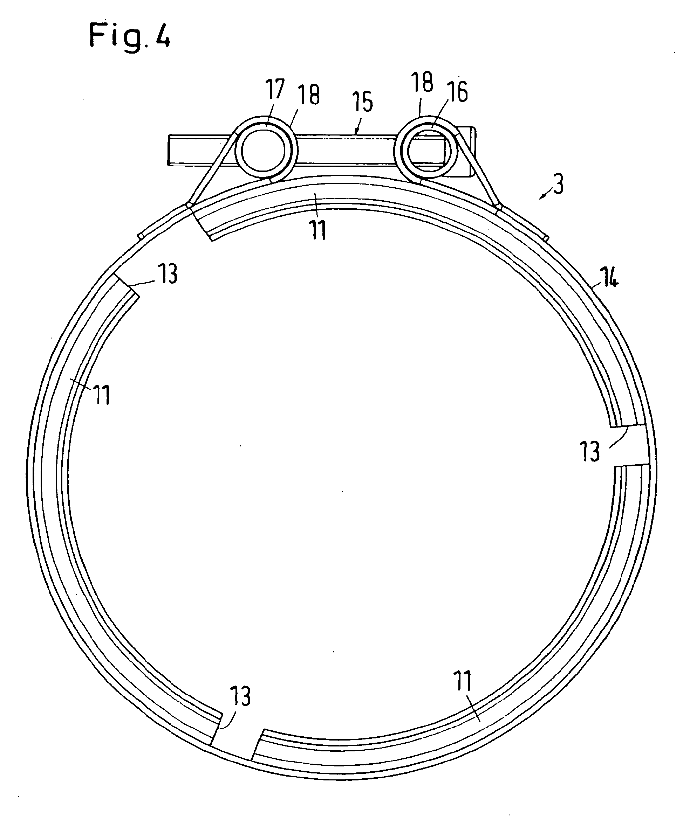

Die Schelle 3 übergreift die Flansche 4 und 10 und zieht mit konischen Seitenwänden 11 und 12, die in Umfangsrichtung in gleichen Winkelabständen Unterbrechungen 13 aufweisen (Fig. 4), um ein äußeres Spannband 14 und damit die gesamte Schelle flexibel zu halten, die beiden Flansche 4 und 10 beim Spannen zusammen. Die Schelle 3 wird mittels einer Schraube 15 gespannt. Die Schraube 15 ist durch koaxiale Löcher in einer Gelenkhülse 16 hindurchgeführt und durch koaxiale Gewindelöcher in einer Gelenkhülse 17 hindurchgeschraubt. Die Gelenkhülsen 16, 17 sind von Schlaufen 18 umgeben, die durch zurückgebogene Endabschnitte des Spannbands 14 gebildet sind. Die zurückgebogenen Enden der Schlaufen 18 sind am übrigen Teil des Spannbandes 14 angeschweißt. Die Spannschraube 15 ist durch Schlitze in den Schlaufen hindurchgeführt.

Das zweite Rohr 2 hat zwischen dem zweiten Flansch 10 und seinem übrigen Rohrabschnitt 19 einen elastisch biegsamen zylindrischen Abschnitt 20, dessen Innendurchmesser größer als der Außendurchmesser des ersten Rohres 1 und des zylindrischen Fortsatzes 9 ist. Ein Übergangsabschnitt 21 (Fig. 1) zwischen dem zylindrischen Abschnitt 20 und dem übrigen Rohrabschnitt 19 des Rohres 2 ist konisch und ebenfalls elastisch biegsam.

Zwischen den beiden Flanschen 4 und 10 ist ein Dichtring 22 aus federndem Stahlblech im gespannten Zustand der Schelle 3 eingeklemmt.

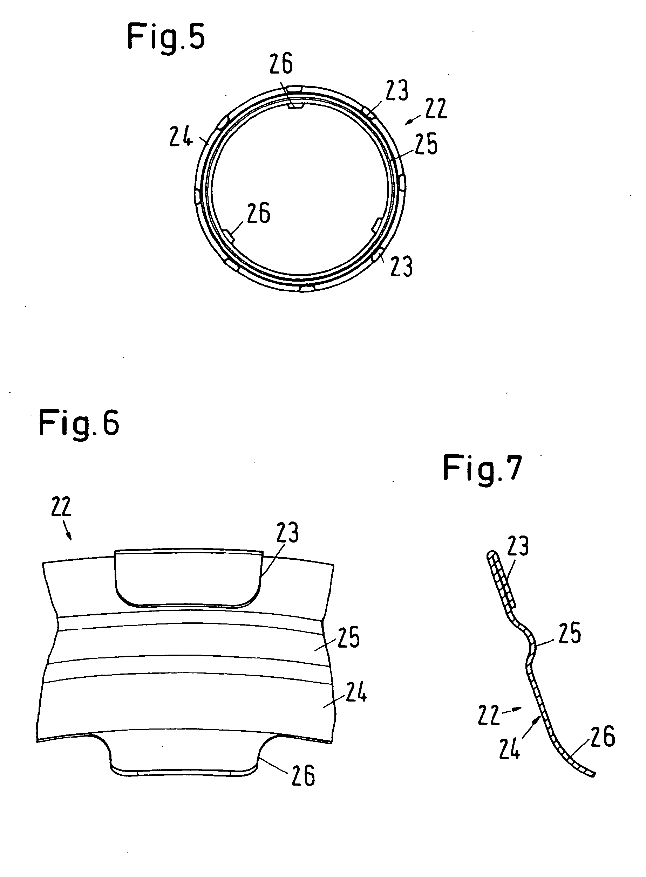

Wie die Fig. 2 und 5 bis 7 deutlicher zeigen, sind acht Randabschnitte 23 in Form von Laschen auf einen Teil des übrigen Dichtringabschnitts 24 zurückgebogen. Der übrige Dichtringabschnitt 24 hat eine über die Dicke der umgebogenen Randabschnitte 23 im ungespannten Zustand der Schelle hinausragende Sicke 25, die sich über den gesamten Umfang des Dichtrings 22 erstreckt. Der radial innere Rand des Dichtrings 22 ist mit drei entsprechend der Rundung 7 gekrümmten Angleichungslaschen 26 in gleichen Umfangsabständen versehen.

Nachstehend werden die Wirkungsweise und Vorteile des dargestellten Ausführungsbeispiels näher beschrieben.

Durch die in dem Ringraum zwischen dem ersten Flansch 4 und dem Rohr 1 eingeschlossene Luft bleibt der Flansch 4 relativ kühl, wenn ein heißes Fluid, wie heiße Abgase, durch die Rohre 1 und 2 geleitet wird. Der erste Flansch 4 weitet sich mithin in radialer Richtung thermisch weniger stark auf als wenn er unmittelbar mit dem heißen Fluid in Berührung kommt. Er kann sich aber unter dem thermischen, radialen Aufweitungsdruck des Rohres 1 unter Abstützung an der Schelle 3 radial nach innen biegen, da seine nicht am Rohr 1 angeschweißte Wand 6 an dem freien Ende des Rohres 1 entlanggleitet, so daß der radiale Aufweitungsdruck des Rohres 1 durch die Verbiegung des Flansches 4 zum größten Teil aufgenommen wird, ohne sich vollständig auf die Schelle 3 zu übertragen. Hierzu trägt insbesondere die Abschrägung 8 des Rohres 1 bei, weil die Wand 6 des Flansches 4 unter dem radialen, thermischen Aufweitungsdruck und der diesem entgegenwirkenden Schelle 3 an der Abschrägung 8 leichter entlanggleiten kann. Die Rundung 7 der Wand 6 des Flansches 4 erleichtert zusätzlich das Entlanggleiten der Wand 6 an der Abschrägung 8.

Der elastische zylindrische Abschnitt 20 hat den Vorteil, daß er sich unter dem thermischen Aufweitungsdruck im zweiten Rohr 2 verbiegt und somit ebenfalls einen großen Teil des Aufweitungsdrucks aufnimmt. Gleichzeitig läßt die Elastizität des zylindrischen Abschnitts 20 eine Abwinklung oder radiale Versetzung der beiden Rohre 1, 2 relativ zueinander zu, wenn sie aufgrund einer geringfügigen Fehlmontage nicht genau koaxial miteinander fluchten.

Da der Innendurchmesser des zylindrischen Abschnitts 20 größer als der Außendurchmesser des ersten Rohres 1 ist, kann sich der zwischen dem zylindrischen Abschnitt 20 und dem mit ihm verbundenen übrigen Rohrabschnitt 19 des Rohres 2 vorhandene Übergangsabschnitt 21 des Rohres 2 unter dem axialen thermischen Dehnungsdruck beider Rohre 1, 2 verbiegen und damit für einen axialen Dehnungsausgleich sorgen.

Der zylindrische Fortsatz 9 der Rundung 7 der zweiten Wand 6 des Flansches 4 hat den Vorteil, daß sich ein Spalt oder Spiel zwischen dem zylindrischen Fortsatz 9 der Wand 6 des ersten Flansches 4 und dem zylindrischen Abschnitt 20 ergibt, wobei der Fortsatz 9 gleichzeitig einen zylindrischen Fortsatz des Rohres 1 bildet und das Zusammenstecken beider Rohre erleichtert, da das Rohr 2 auf dem Fortsatz 9 geführt wird. Gleichzeitig lassen sich dadurch beide Rohre 1, 2 weitgehend zentrieren, wenn sie zunächst nicht koaxial zusammengeführt werden.

Die Konizität und Elastizität des Übergangsabschnitts 21 erleichtert ebenfalls eine radiale thermische Aufweitung des übrigen Abschnitts 19 des Rohres 2 relativ zu seinem zylindrischen Abschnitt 20 und dem zweiten Flansch 12, so daß der radiale, thermische Aufweitungsdruck des Rohres 2 auf die Schelle 3 zum Teil auch durch den Übergangsabschnitt 21 ausgeglichen wird.

Der aus Stahlblech bestehende Dichtring 22 hält zum einen hohen Temperaturen stand, wie sie insbesondere bei Abgasrohren auftreten, ist aber dennoch im Bereich seiner Sicke 25 elastisch. Diese Sicke 25 nimmt nicht nur den Einspanndruck der Schelle 3 auf, sondern teilweise auch die axiale thermische Dehnung beider Rohre 1, 2 relativ zueinander, ohne sich vollständig eben zurückzuverformen. Diese Rückverformung wird dadurch verhindert, daß die zurückgebogenen Randabschnitte 23 bzw. Laschen als Anschlag für den zweiten Flansch 10 des Rohres 2 wirken. Die Elastizität der Sicke 25 bleibt mithin weitgehend erhalten. Statt über den Umfang des Dichtrings 22 verteilter Randabschnitte 23 kann auch ein sich über den gesamten Umfang des Dichtrings 22 erstreckender Randabschnitt durch Umbördelung vorgesehen sein. Einzelne Randabschnitte 23 in Form von Laschen lassen sich jedoch leichter umbiegen als ein durchgehend über den Umfang des übrigen Dichtringabschnitts 24 umgebördelter Randabschnitt des Dichtrings 22.

Die Sicke 25 erstreckt sich vorzugsweise über den gesamten Umfang des Dichtrings 22. Sie kann daher durch ein einfaches Prägewerkzeug geformt werden. Alternativ wäre es aber auch möglich, die Sicke 25 in einzelne Sicken aufzuteilen oder radiale, über den Umfang des Dichtrings 22 verteilte Sicken vorzusehen. Diese hätten jedoch insgesamt eine höhere Steifigkeit als die sich über den gesamten Umfang des übrigen Dichtringabschnitts 24 erstreckende Sicke 25.

## Patentansprüche

1. Verbindung zweier Rohre (1, 2), von denen ein erstes Rohr (1) einen mit einer ersten Wand (5) am Rohrumfang angeschweißten ersten Flansch (4) aus Blech aufweist und ein zweites Rohr (2) einen als zweiter Flansch (10) geformten Endabschnitt aufweist, mit einer die Flansche (4, 10) übergreifenden, spannbaren Schelle (3), die konische Seitenwände (11, 12) aufweist, durch die die Flansche (4, 10) beim Spannen der Schelle (3) axial zueinander hin gedrückt werden, wobei der erste Flansch (4) einen zur Längsmittelachse des ersten Rohres (1) koaxialen, geschlossenen Ringraum mit dem ersten Rohr (1) begrenzt, **dadurch gekennzeichnet, daß** sich eine zweite Wand (6) des ersten Flansches (4) am freien Ende des ersten Rohres (1) in radialer Richtung gleitend abstützt.

2. Verbindung nach Anspruch 1, **dadurch gekennzeichnet, daß** das freie Ende des ersten Rohres (1) abgeschrägt ist.

3. Verbindung nach Anspruch 1 oder 2, **dadurch gekennzeichnet, daß** sich die zweite Wand (6) des ersten Flansches (4) mit einer Rundung (7) am freien Ende des ersten Rohres (1) abstützt.

4. Verbindung nach einem der Ansprüche 1 bis 3, **dadurch gekennzeichnet, daß** das zweite Rohr (2) zwischen dem zweiten Flansch (10) und seinem übrigen Rohrabschnitt (19) einen elastisch biegsamen, zylindrischen Abschnitt (20) aufweist.

5. Verbindung nach Anspruch 4, **dadurch gekennzeichnet, daß** der Innendurchmesser des zylindrischen Abschnitts (20) größer als der Außendurchmesser des ersten Rohres (1) ist.

6. Verbindung nach den Ansprüchen 3 und 4, **dadurch gekennzeichnet, daß** die Rundung (7) der zweiten Wand (6) des ersten Flansches (4) in einen zylindrischen Fortsatz (9) übergeht und der Innendurchmesser des zylindrischen Abschnitts (20) des zweiten Rohres (2) größer als der Außendurchmesser des Fortsatzes (9) ist.

7. Verbindung nach Anspruch 6, **dadurch gekennzeichnet, daß** der Übergangsabschnitt (21) zwischen dem zylindrischen Abschnitt (20) und dem mit ihm verbundenen übrigen Rohrabschnitt (19) des zweiten Rohres (2) konisch ist.

8. Verbindung nach einem der Ansprüche 1 bis 7, **dadurch gekennzeichnet, daß** sie zwischen den Flanschen (4, 10) einen Dichtring (22) in Form eines elastischen Stahlbands mit wenigstens einem Randabschnitt (23) aufweist, der auf einen Teil des übrigen Dichtringabschnitts (24) zurückgebogen ist, und daß der übrige Dichtringabschnitt (24) wenigstens eine über die Dicke des umgebogenen Randabschnitts (23) im ungespannten Zustand der Schelle (3) hinausragende Sicke (25) aufweist.

9. Verbindung nach Anspruch 8, **dadurch gekennzeichnet, daß** jeder Randabschnitt (23) eine Lasche bildet.

10. Verbindung nach Anspruch 8 oder 9, **dadurch gekennzeichnet, daß** die Sicke (25) sich über den gesamten Umfang des Dichtrings (22) erstreckt.

## Claims

1. A connection of two pipes (1, 2), a first pipe (1) of which having a first flange (4) of sheet metal, wherein the first flange is welded with a first wall (5) to the pipe circumference and a second pipe (2) having an end section that is shaped as a second flange (10), a tightenable clamp (3) engaging across the first and second flanges (4, 10) and having conical sidewalls (11, 12) forcing the first and second flanges (4, 10) axially against one another when the clamp (3) is tightened, wherein the first flange (4) delimits together with the first pipe (1) a coaxial closed annular chamber, **characterized in that** a second wall (6) of the first flange (4) is glidingly supported on a free end of the first pipe (1).

2. The connection according to claim 1, **characterized in that** the free end of the first pipe (1) is bevelled.

3. The connection according to claim 1 or 2, **characterized in that** the second wall (6) of the first flange (4) has a rounded portion (7) that is supported on the free end of the first pipe (1).

4. The connection according to any of claims 1 to 3, **characterized in that** the second pipe (2) has an elastically bendable cylindrical section (20) arranged between the second flange (10) and a remaining section (19) of the second pipe (2).

5. The connection according to claim 4, **characterized in that** the inner diameter of the cylindrical section (20) is greater than an outer diameter of the first pipe (1).

6. The connection according to claims 3 and 4, **characterized in that** a rounded portion (7) of the second wall (6) of the first flange (4) passes into a cylindrical projection (9), and the inner diameter of the cylindrical section (20) of the second pipe (2) is greater than an outer diameter of the cylindrical projection (9).

7. The connection according to claim 6, **characterized in that** the transition section (21) between the cylindrical section (20) and the remaining section (19) of the second pipe (2) connected thereto is conical.

8. The connection according to any of claims 1 to 7, **characterized in that** it comprises a sealing ring (22) arranged between the flanges (4, 10), wherein the sealing ring is in form of an elastic sheet steel strap having at least one edge section (23) which is bent back onto a portion of the remaining sealing ring section (24), and that the remaining sealing ring section (24) has at least one corrugation (25) that projects past a thickness of the bent edge section (23) in an untightened state of the clamp (3).

9. The connection according to claim 8, **characterized in that** each edge section (23) forms a tab.

10. The connection according to claim 8 or 9, **characterized in that** the corrugation (25) extends about the entire circumference of the sealing ring (22).

## Revendications

1. Raccordement de deux conduits (1, 2), dont un premier conduit (1) présente une première bride (4) en tôle soudée à une première paroi (5) sur la périphérie de conduit et un second conduit (2) présente une section d'extrémité formée comme une seconde bride (10), avec un collier (3) pouvant être serré, recouvrant les brides (4, 10), qui présente des parois latérales (11, 12) coniques, par lesquelles sont pressées axialement l'une vers l'autre les brides (4, 10) lors du serrage du collier (3), la première bride (4) délimitant un espace annulaire fermé, coaxial par rapport à l'axe médian longitudinal du premier conduit (1) avec le premier conduit (1), **caractérisé en ce qu'**une seconde paroi (6) de la première bride (4) s'appuie de manière coulissante sur l'extrémité libre du premier conduit (1) dans le sens radial.

2. Raccordement selon la revendication 1, **caractérisé en ce que** l'extrémité libre du premier conduit (1) est biseautée.

3. Raccordement selon la revendication 1 ou 2, **caractérisé en ce que** la seconde paroi (6) de la première bride (4) dotée d'un arrondi (7) s'appuie sur l'extrémité libre du premier conduit (1).

4. Raccordement selon l'une quelconque des revendications 1 à 3, **caractérisé en ce que** le second conduit (2) présente entre la seconde bride (10) et son autre section de conduit (19), une section (20) cylindrique, flexible élastiquement.

5. Raccordement selon la revendication 4, **caractérisé en ce que** le diamètre intérieur de la section cylindrique (20) est supérieur au diamètre extérieur du premier conduit (1).

6. Raccordement selon les revendications 3 et 4, **caractérisé en ce que** l'arrondi (7) de la seconde paroi (6) de la première bride (4) se fond en un prolongement cylindrique (9) et le diamètre intérieur de la section cylindrique (20) du second conduit (2) est supérieur au diamètre extérieur du prolongement (9).

7. Raccordement selon la revendication 6, **caractérisé en ce que** la section de transition (21) entre la section cylindrique (20) et la section restante de conduit (19) reliée à celle-ci du second conduit (2) est conique.

8. Raccordement selon l'une quelconque des revendications 1 à 7, **caractérisé en ce qu'**il présente entre les brides (4, 10), une bague d'étanchéité (22) en forme de ruban d'acier élastique avec au moins une section de bord (23) qui est repliée sur une partie de la section restante de bague d'étanchéité (24) et **en ce que** la section restante de bague d'étanchéité (24) présente au moins une moulure (25) dépassant de l'épaisseur de la section de bord (23) repliée à l'état non serré du collier (3).

9. Raccordement selon la revendication 8, **caractérisé en ce que** chaque section de bord (23) forme une languette.

10. Raccordement selon la revendication 8 ou 9, **caractérisé en ce que** la moulure (25) s'étend sur toute la périphérie de la bague d'étanchéité (22).
